(19) Europäisches Patentamt

European Patent Office

Office européen des brevets

(11) **EP 2 515 203 A1**

(12) **EUROPÄISCHE PATENTANMELDUNG**

(43) Veröffentlichungstag:
**24.10.2012 Patentblatt 2012/43**

(51) Int Cl.:
***G06F 3/01*** *(2006.01)*     *A61B 5/0476* *(2006.01)*

(21) Anmeldenummer: **12176632.3**

(22) Anmeldetag: **24.03.2010**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(62) Dokumentnummer(n) der früheren Anmeldung(en) nach Art. 76 EPÜ:
**10157618.9 / 2 302 485**

(71) Anmelder: **tecData AG**
**9240 Uzwil (CH)**

(72) Erfinder: **Otte, Ralf**
**69469 Weinheim (DE)**

(74) Vertreter: **Hepp Wenger Ryffel AG**
**Friedtalweg 5**
**9500 Wil (CH)**

Bemerkungen:
Diese Anmeldung ist am 17-07-2012 als Teilanmeldung zu der unter INID-Code 62 erwähnten Anmeldung eingereicht worden.

(54) **Verfahren zum Steuern oder Regeln einer Maschine**

(57)     Die Erfindung betrifft eine berührungslose Mensch/Maschine-Schnittstelle sowie ein entsprechendes Verfahren zum Steuern oder Regeln einer Maschine. Die Schnittstelle umfasst einen ersten Signalgeber, der mit mindestens einem ein Rauschsignal aufweisendes Bauteil ausgestattet ist. Mittels einer erfindungsgemässen Kalibrierung kann das Signal zur Steuerung oder Regelung einer Maschine verwendet werden.

Fig. 1:

EP 2 515 203 A1

**Beschreibung**

Die vorliegende Erfindung betrifft das technische Gebiet der Steuerung und/oder Regelung von Maschinen, insbesondere mittels einer berührungslosen Mensch/Maschine-Schnittstelle.

Es ist bekannt, dass Spannungsschwankungen an der Kopfoberfläche eines Menschen abgegriffen und aufgezeichnet werden können; das Verfahren ist als Elektroenzephalographie (EEG) bekannt. Die verschiedenen Frequenzbänder des EEGs können verschiedenen Zuständen des Probanden zugeordnet werden; die Frequenzbänder reichen vom Delta-Frequenzband (ca. 0.5-3.5 Hz im Tiefschlaf/Trance) bis zum Gamma-Frequenzband (ca. 38-70 Hz bei anspruchsvollen Tätigkeiten mit hohem Informationsfluss). Die Auswertung des EEG erfolgt traditionell durch Mustererkennung des geschulten Auswerters.

Bekannt ist ebenfalls, dass durch sogenanntes Averaging von konventionell erfassten EEG-Signalen Signale des tiefer gelegenen Gehirns herausgefiltert werden können, die ansonsten im Rauschen - hervorgerufen durch andere Gehirnteile - untergehen würden. Eine spezielle Anwendung ist bspw. die Detektion von Reaktionen des Hirnstamms auf Reize. Derartige Reaktionen des Hirnstamms würden im EEG normalerweise von Signalen des Cortex überlagert. Durch Averaging der Signale können jedoch die Signale des Cortex derart weitgehend herausgemittelt werden, dass auch schwache Signale des Hirnstamms detektiert werden können. Hierbei macht man sich in der Medizin die zeitliche Verschiebung von charakteristischen Peaks zu Nutze, die bei Probanden mit gesunder Reizleitung und Verarbeitung im Hirnstamm erhalten wurden. Eine signifikante Verschiebung dieses Peaks dient als Hinweis bspw auf einen Hirntumor; siehe hierzu auch Ralf Otte, "Untersuchung von Artefakten bei der Messung von akustisch evozierten Hirnstammpotentialen", Diplomarbeit, S. 15 ff, TU Berlin, Institut für Regelungstechnik und Systemdynamik in Kooperation mit der TU Chemnitz, Institut für Informationstechnik; sowie U. Kischka, C. Wallesch, G. Wolf, "Methoden der Gehirnforschung", Spektrum Akademischer Verlag, 1997, S. 171 ff.

Neuere, nicht-medizinische Applikationen des EEG sind gerichtet auf das Steuern von Computern durch kognitive Prozesse. Es wurden Erfolge berichtet, dass mit Hilfe des EEGs ein Mauscursor nach einer Lernphase recht präzise bewegbar ist.

Inzwischen haben derartige Brain-Computer Interfaces (BCI) mittels EEG bereits Einzug in die medizinische Praxis gehalten und dienen schwer gelähmten Menschen zur Kommunikation mit der Aussenwelt. Dies ist dadurch möglich, dass die Gedanken der Probanden mittels einer dem konventionellen EEG nachgelagerten Mustererkennung erkannt oder zumindest in bestehende Klassen, zum Beispiel "0" vs. "1", "links" vs. "rechts" oder "ja" vs. "nein" eingeteilt werden können.

Seit dem Jahre 2008 vertreibt die Firma OCZ Technology einen sogenannten NIA (Neural Impulse Actuator), mit welchem die EEG Technik mittlerweile auch auf dem Computerspielemarkt Anwendung findet; hierbei werden mittels der Gedanken von Probanden und deren Echtzeit-EEG-Auswertung Symbole auf einem Computerbildschirm manipuliert.

Bei allen vorgenannten, auf dem klassischen EEG basierenden Anwendungen ist der zwingend notwendige, unmittelbare Kontakt von Elektroden mit der Kopfoberfläche des Menschen nachteilig. Eine berührungslose Variante (bspw. des NIA von OCZ), die also zumindest einfache Befehle wie "links"/"rechts" unterscheiden und verarbeiten kann, ist nicht bekannt.

Es ist daher eine Aufgabe der vorliegenden Erfindung, eine berührungslose Mensch/Maschine-Schnittstelle und ein entsprechendes Verfahren zur Steuerung oder Regelung einer Maschine bereitzustellen, um bspw. die Kommunikation mit Schwerstbehinderten zu erleichtern oder neuartige Sicherheits- oder Computerspieleanwendungen zu realisieren.

Die Aufgabe wird gemäss der Erfindung gelöst durch ein Verfahren zum Steuern oder Regeln einer Maschine mittels einer berührungslosen Mensch/Maschine-Schnittstelle, umfassend die Schritte:

a) Bereitstellen eines ersten Signalgebers, der mit mindestens einem ein Rauschsignal aufweisendes Bauteil ausgestattet ist (vorzugsweise ist dieses Bauteil ein Halbleiterbauelement, insbesondere eine Halbleiterdiode oder ein Transistor);

b) Bereitstellen eines Datensatzes von Befehlen zur Steuerung einer Maschine;

c) optional Erhebung von Kalibrierungsdaten durch

ca) Anordnung des ersten Signalgebers und eines Menschen in räumlicher Nähe;

cb) wiederholte Aufnahme des Rauschsignals des ersten Signalgebers in Abhängigkeit von einem dem Menschen vorgegebenen Gedanken, wobei der Gedanke ausgewählt ist aus den Elementen des Datensatz gemäss b);
(Die wiederholte Aufnahme erfolgt vorzugsweise 30 bis 100x; dies hat sich am unteren Ende des Bereichs als für die Kalibrierung ausreichend sowie im oberen Bereich als für die Qualität der Kalibrierung besonders vorteilhaft erwiesen. Die wiederholte Aufnahme erfolgt zudem zu zufällig vorgegebenen Zeitpunkten, womit eine Konditionierung des Menschen und andere externe Störungen ausgeschlossen werden können.)

cc) Mittelung der gemäss cb) erhaltenen Rauschsignale für die einzelnen vorgegebenen Gedanken;

(Vorzugsweise werden die analogen Rauschsignale vor der Mittelung (auch Averaging genannt) noch mit an sich bekannten Massnahmen verstärkt (bspw. mit einem Verstärkungsfaktor im Bereich von etwa 10 bis etwa 100), diskretisiert (bspw. mit 8 oder 16 Bit) und abgetastet (bspw. mit 1000 Hz, womit das Abstandstheorem der Signalabtastung erfüllt ist, da im Rahmen der Erfindung Hirnwellen bis max. 100 Hz detektiert werden).)

cd) ggf. mathematische Bearbeitung des/der gemäss cc) gemittelten Rauschsignals/Rauschsignale;

ce) Speicherung der gemäss cc) erhaltenen Rauschsignale und/oder der hiervon gemäss cd) abgeleiteten Daten, zugeordnet zu Elementen des Datensatzes;

cf) ggf. Wiederholung der Verfahrensschritte cb)-ce) und Speicherung einer Mehrzahl von gemäss cc) erhaltenen Rauschsignalen und/oder den hiervon gemäss cd) abgeleiteten Daten, zugeordnet zu Elementen des Datensatzes, so dass zu einem Element des Datensatzes jeweils eine Mehrzahl von Rauschsignalen oder davon abgeleiteten Daten gespeichert werden;
(Die Wiederholung der Verfahrensschritte cb)-ce) kann typischerweise ca. 1-10x erfolgen, was sich für die Qualität der Kalibrierung als vorteilhaft erwiesen hat. Die Qualität der Kalibrierung steigt mit der Anzahl der Wiederholungen.)

d) Steuerung oder Regelung einer Maschine insbesondere unter Verwendung der gemäss c) erhobenen Kalibrierungsdaten durch

da) wiederholte Aufnahme des Rauschsignals des ersten Signalgebers in Abhängigkeit von einem dem Menschen nicht vorgegebenen (sondern von diesem zu einem bestimmten Zeitpunkt frei gewählten) Gedanken, ausgewählt aus den Elementen des Datensatz gemäss b);
(Vorteilhaft wird eine Wiederholungshäufigkeit der Aufnahme des Rauschsignals gewählt, die der in Schritt cb) gewählten Häufigkeit im wesentlichen entspricht; hierdurch wird das Nutzsignal besonders gut aus dem Rauschsignal herausgehoben und mit den Signalen vergleichbar, die mit Schritt cb) erhalten wurden.)

db) Mittelung der gemäss da) erhaltenen Rauschsignale für die nicht vorgegebenen Gedanken;
(Vorzugsweise werden die analogen Rauschsignale vor der Mittelung (auch Averaging genannt) noch mit an sich bekannten Massnahmen verstärkt (bspw. mit einem Verstärkungsfaktor im Bereich von etwa 10 bis etwa 100), diskretisiert (bspw. mit 8 oder 16 Bit) und abgetastet (bspw. mit 1000 Hz, womit das Abstandstheorem der Signalabtastung erfüllt ist, da im Rahmen der Erfindung Hirnwellen bis max. 100 Hz detektiert werden).)

dc) ggf. mathematische Bearbeitung des/der gemäss db) gemittelten Rauschsignals/Rauschsignale;

dd) Zuordnung des/der gemäss dc) erhaltenen Rauschsignals/Rauschsignale zu einem Gedanken des Datensatzes insbesondere aufgrund eines Vergleichs mit den gemäss c) erhobenen Kalibrierungsdaten und/oder vorgegebenen Referenzdaten.
(Alternativ oder ggf. auch zusätzlich zu den Kalibrierungsdaten können Referenzdaten bereitgestellt werden, die bspw. aus vorherigen Kalibrierungen oder auch aus Datensammlungen von Erfahrungswerten, insbesondere anderen Kalibrierungen erhalten wurden. Es hat sich jedoch in bisherigen Versuchen gezeigt, dass insbesondere eine zeitnahe Kalibrierung mit Hilfe des Probanden selbst die besten Ergebnisse liefert.)

In besonders bevorzugten Ausführungsformen ist das Rauschsignal des Signalgebers ein Schrotrauschen oder ein Lawinenrauschen. Schrotrauschen ist die Form des Rauschens, die dann auftritt, wenn ein elektrischer Strom eine Potentialbarriere überwinden muss. Dieses Schrotrauschen wird meist als Rauschstromquadrat dargestellt gemäss

$$I_R^2 = 2 * e * I * \Delta f$$

($I_R^2$, gemitteltes Rauschstromquadrat; e, Elementarladung; I, fliessender Strom; $\Delta f$, Bandbreite der Messung). Typische Beispiele für das Auftreten von Schrotrauschen sind insbesondere Sperrströme bei Dioden und Transistoren; Photostrom und Dunkelstrom bei Photodioden und Vakuum-Photozellen; Anodenstrom von Hochvakuum-Röhren.

Lawinenrauschen tritt bspw. in Z-Dioden bei oberhalb ihrer Sperrspannung betriebenen pn-Übergängen, oder auch in Gasentladungsröhren oder Avalanche-Transistoren auf.

Besonders bevorzugt ist im Rahmen der Erfindung die Verwendung des Schrotrauschens von Z-Dioden als Rauschsignal des Signalgebers.

Vorzugsweise enthält der in Schritt b) bereitgestellte Datensatz von Befehlen zur Steuerung einer Maschine Elemente ausgewählt aus der Gruppe bestehend aus "ja", "nein", "links", "rechts", "oben", "hoch", "unten", "runter", "vorne", "vorwärts", "hinten", "rückwärts". Ganz besonders bevorzugt besteht der Datensatz aus Paaren, insbesondere gegensätzlichen Paaren solcher Elemente; insbesondere "links"/"rechts"; "oben"/"unten"; "hoch"/ "runter", "vorne"/ "hinten"; "vorwärts"/"rückwärts"; "ja"/"nein".

In bevorzugten Ausführungsformen der Erfindung werden der Signalgeber und der Mensch in Schritt ca) in einem Abstand von > 1 cm, vorzugsweise von > 50 cm, besonders bevorzugt von > 1 m angeordnet. Insbesondere mit den grösseren Abständen kann eine besonders komfortable Mensch/Maschine-Schnittstelle realisiert werden.

In weiteren besonders bevorzugten Ausführungsformen erfolgt die Aufnahme des Rauschsignals des ersten Signalgebers in Abhängigkeit von einem dem Menschen vorgegebenen Gedanken in Schritt cb) über einen vordefinierten Zeitraum nach der Vorgabe des Gedanken, insbesondere über den Zeitraum von 0 bis 1 s, vorzugsweise über den Zeitraum von 0 bis 500 ms nach der Vorgabe des Gedankens. Hierdurch kann gewährleistet werden, dass das aufgenommene Signal jeweils das durch den Gedanken hervorgerufene Signal enthält. Eine fallweise geeignete Anpassung des geeigneten Zeitintervalls kann vom Fachmann leicht ermittelt werden. In der Regel hat sich der Zeitraum von 0 bis 500 ms nach der Vorgabe des Gedankens als günstig erwiesen. Dies hat sich zur Herausfilterung der gewünschten Informationen aus folgenden Gründen als vorteilhaft erwiesen: Die empfangenen EEG-Signale sind erstens sehr schwach (sie fallen mit dem Quadrat des Abstands der Entfernung zwischen dem Empfänger (dem Signalgeber) und dem Gehirn ab) und liegen zweitens in Wellenlängenbereichen, in denen auch Störsignale aus der Umgebung vorhanden sind; der Signal/Rauschabstand liegt bei etwa 1:1000 oder kleiner. Eine wesentliche Herausforderung der Erfindung ist daher die Filterung der für die Steuerung oder Regelung der Maschine erforderlichen Nutzsignale. Dies gelingt erfindungsgemäss durch die Detektion des Signals während der Kalibrierung zu geeignet gewählten Zeitintervallen, nachdem dem Menschen ein Gedanke vorgegeben worden ist. Das kann beispielsweise durch das Ziehen einer Karte erfolgen, auf welcher "links" oder "rechts" geschrieben steht. Wenn die Detektion des Signals zu diesen zufälligen, aber (in dem Beispiel durch das Ziehen) definierten Zeitpunkten erfolgt, so mitteln sich durch das oben dargelegte Prinzip der Kalibrierung zu zufälligen Zeitpunkten, wie vorstehend beschrieben, alle externen Störsignale sowie auch andere Hirnsignale, auch von in der Nähe befindlichen Personen, zu Null. Die Signale, die aufgezeichnet werden, nachdem dem Menschen ein Gedanke vorgegeben wurde, enthalten jedoch auch die für diese Reize charakteristischen Signale; diese bleiben bei der Mittelung der Signale, wie vorstehend beschrieben, zurück, da diese gerade nicht zufällig sind, sondern durch die Vorgabe eines Gedankens zu einem definierten Zeitpunkt initiiert wurden und deterministisch sind; diese Signale mitteln sich nicht zu Null. Es wird so auf verblüffend einfache Art und Weise ein charakteristisches Signal erhalten bspw. für "rechts" oder "links".

Es hat sich herausgestellt, dass die Kalibrierungsdaten verschiedener Probanden sehr häufig nicht gleich sind, da jeder Proband zwar ein charakteristisches Signal bei den fraglichen Gedanken aus dem Datensatz b) erzeugt (welche Gehirnschichten dafür verantwortlich sind, ist für die vorliegende Erfindung unerheblich, da sich die Signale anderer Probanden auch beim gleichen Reiz unterscheiden; durch die oben beschriebene Art und Weise der Kalibrierung kommt es aber nicht darauf an, die charakteristische Signalantwort des Gehirns der Menschen im allgemeinen bei gewissen Gedanken zu ermitteln (was in medizinischen Anwendungen des klassischen Averaging angestrebt wird), sondern es wird das individuelle Signal eines Anwenders durch Kalibrierung ermittelt und in weiteren Anwendungen genutzt, um im Vergleich mit den vorher kalibrierten Signalen Steuerungen und Regelungen an Maschinen durchzuführen.

Weiterhin bevorzugt umfasst die mathematische Bearbeitung des in Schritt cc) erhaltenen, gemittelten Rauschsignals die Darstellung des erhaltenen Kurvenzugs als multidimensionaler Vektor. Im Falle eines gewählten Zeitintervalls von 500 ms nach der Vorgabe des Gedankens und bei einer Abtastung von 1000 Hz kann das gemittelte Rauschsignal des ersten Signalgebers bspw. in einen 500-dimensionalen Vektor überführt werden (eine Dimension je Millisekunde; auch andere Abstufungen sind selbstverständlich möglich). Die Überführung in einen Vektor vereinfacht die mathematische Verarbeitung des (zeitlichen) Kurvenzugs in der nachfolgenden Analyse.

Im einfachsten Falle könnte man erwarten, dass das nach dem Mitteln übrig gebliebene Referenzsignal für einen Referenzgedanken über alle Probanden oder zumindest für jeden einzelnen Probanden immer gleich ist, so dass in der Anwendungsphase das unbekannte gemittelte Signal nur noch mit dem gespeicherten Signal verglichen werden muss. Die Anwendungen zeigen jedoch, dass die Referenzsignale auch eines Probanden schwanken, so dass es sich als besonders vorteilhaft erwiesen hat, mehrere Referenzsignale für den gleichen Gedanken zu ermitteln und nachfolgend heranzuziehen (vergl. Verfahrensschritt cf)). Besonders bevorzugt werden diese Referenzsignale (typischerweise Kurvenzüge) durch mathematische Bearbeitung in Referenzvektoren umgewandelt, wie vorstehend beschrieben. Als ausreichend haben sich 10 Referenzsignale bzw. Referenzvektoren für jeden Referenzgedanken herausgestellt. Damit sind für jeden Referenzgedanken jeweils 10 Referenzvektoren hinterlegt; nach o.g. Beispiel 10 500-dimensionale Referenzvektoren z.B. für "links" und 10 500-dimensionale Referenzvektoren z.B. für "rechts".

In der Anwendungsphase (vergl. da) bis dd)), wenn der Gedanke des Probanden ermittelt werden soll, wird durch das Mitteln über einen Zeitraum von z.B. 30x 500 Millisekunden ein neuer Vergleichsvektor erstellt (wie vorstehend anhand eines Referenzvektors beschrieben). Dieser wird dann mit den gespeicherten Referenzvektoren verglichen; vergl. dd). Dies kann auf verschiedene, dem Fachmann an sich geläufige Art und Weise erfolgen; einfache geeignete Möglichkeiten des Vergleichs sind bspw.:

- der euklidische Abstand des Vergleichsvektors zu allen gespeicherten Referenzvektoren (der Vergleichsvektor wird dann der Klasse zugeteilt, die derjenigen des Referenvektors mit dem geringsten euklidischen Abstand entspricht); oder

- das Skalarprodukt des Vergleichsvektors mit allen Referenzvektoren (der Vergleichsvektor wird dann der Klasse zugeteilt, die derjenigen des Referenzvektors entspricht, mit dem der Vergleichsvektor das grösste Skalarprodukt bildet).

Nach Durchführung eines solchen Vergleichs wird der Vergleichsvektor derjenigen Klasse zugeordnet, zu der der Vektor mit dem geringsten euklidischen Abstand gehört (bspw. einem der 10 Referenzvektoren für die Klasse "links").

In weiteren Ausführungsbeispielen können in Abweichung von den vorstehend beschriebenen Möglichkeiten des Vergleichs bspw. die 3, 5 oder 7 (usw.) Referenzvektoren ermittelt werden, die dem Vergleichsvektor im Vektorraum am nächsten sind; das Mass "am nächsten" kann dabei wiederum durch eine geeignete Metrik (bspw. wieder dem euklidischen Abstand) gebildet werden. Hierbei wird vorzugsweise eine ungerade Zahl benachbarter Referenzvektoren analysiert, sodass eine klare Zuordnung zu einer Klasse derart erfolgen kann, dass die blosse Anzahl nächstliegender Referenzvektoren über die Zuordnung entscheidet. Selbstverständlich ist bei einer Betrachtung mehrerer Referenzvektoren aber auch eine Berücksichtigung sowohl der Anzahl benachbarter Referenzvektoren einer Klasse als auch deren jeweiliger Abstand zum Vergleichsvektor berücksichtigbar. Hierbei kann mit Routineversuchen ggf. auch eine geeignete Gewichtung der beiden Parameter ermittelt werden.

Die vorstehend beschriebenen Verfahren sind deshalb vorteilhaft, weil damit aufgrund der Transformation der Kurvenzüge in Vektoren beliebig komplexe Klassengrenzen modelliert werden können, da die Vektoren der verschiedenen Klassen nicht wohlgeordnet im Raum verteilt sein müssen, sondern beliebig komplex ineinander verschachtelt im Vektorraum angeordnet sein können. Egal wie komplex die Trennfläche von bspw. zwei Klassen ausgestaltet ist, es gibt immer einen Referenzvektor, der dem Vergleichsvektor am nächsten liegt. Dadurch lässt sich auf einfache Art und Weise eine ausreichende Genauigkeit der Ermittlung des Gedankens des Probanden erreichen. Genügt die Genauigkeit der Zuordnung im Einzelfall nicht, so kann die Trenngenauigkeit der Klassen und damit die Genauigkeit der Zuordnung erhöht werden bspw. durch Erhöhung der Anzahl der Mittelungen (bspw. von 30 auf 40 oder auch 100, s.o.); durch Erhöhung der Anzahl der Referenzvektoren (bspw. von 10 auf 20 je Klasse; s.o.); durch Veränderung der Zuordnungs-Metrik (bspw. statt des quadratischen Abstands (euklidisch) können Abstandsmasse der vierten, sechsten oder achten Potenz verwendet werden). Alle diese Möglichkeiten haben zwar einen erhöhten Rechenaufwand zur Folge, sind aber ansonsten durch den Fachmann mit Routinemassnahmen zu implementieren.

Eine derartige Nutzbarkeit der Mittelung ("Averaging") war nicht zu erwarten; während in der Medizin eine vom Probanden nicht aktiv beeinflussbare Reaktion des Hirns (Verschiebung eines Peaks aufgrund einer krankhaften Veränderung des Hirns) detektiert wird, ist die vorliegende Erfindung mit Veränderungen der Signale des Hirns aufgrund eines ausschliesslich vom Probanden beeinflussbaren bzw. bewusst erzeugten Signal befasst (Gedanken). Auch hätte der Fachmann allenfalls aufgrund der bekannten medizinischen Anwendung des Averaging noch Referenzkurvenzüge bzw die Verschiebung von Charakteristika von Referenzkurvenzügen überhaupt in Betracht gezogen. Auf eine solche Art und Weise ist eine Abgrenzung von Elementen des Datensatzes für die vorliegende Anwendung nicht möglich.

Ein weiterer Aspekt der Erfindung betrifft eine berührungslose Mensch/Maschine-Schnittstelle, insbesondere zur Durchführung des vorstehend beschriebenen Verfahrens, wobei die Mensch/Maschine-Schnittstelle umfasst:

• wenigstens einen ersten Signalgeber, der mit mindestens einem ein Rauschsignal aufweisendes Bauteil ausgestattet ist;

• wenigstens eine Kalibrierungs- und Auswertungseinheit, umfassend

   o wenigstens einen zweiten Signalgeber, der ein optisches, akustisches oder haptisches Signal liefert, das vom Menschen wahrgenommen werden kann;

   o wenigstens eine EDV-Anlage für die

      ■ Erhebung, Bearbeitung und Speicherung von Signalen des ersten Signalgebers;

      ■ Steuerung oder Regelung einer Maschine auf der Basis von Signalen des ersten Signalgebers.

Die Erfindung wird nachfolgend anhand von Ausführungsbeispielen und Figuren erläutert, ohne dass der Gegenstand der Erfindung auf diese Ausführungsformen zu beschränken wäre. Es zeigen:

Fig. 1:    Blockschaltbild eines ersten Signalgebers;

Fig. 2: Stromlaufplan eines ersten Signalgebers;

Fig. 3: Exemplarisches Rauschsignal (Oszilloskop-Plot, Rohdaten), erhalten in 10 cm Abstand vom Kopf des Probanden, während eines zufälligen Gedanken

    a: "rechts" (Einzelmessung);
    b: "links" (Einzelmessung);
    c: "rechts" (nach Mittelung);
    d: "links" (nach Mittelung).

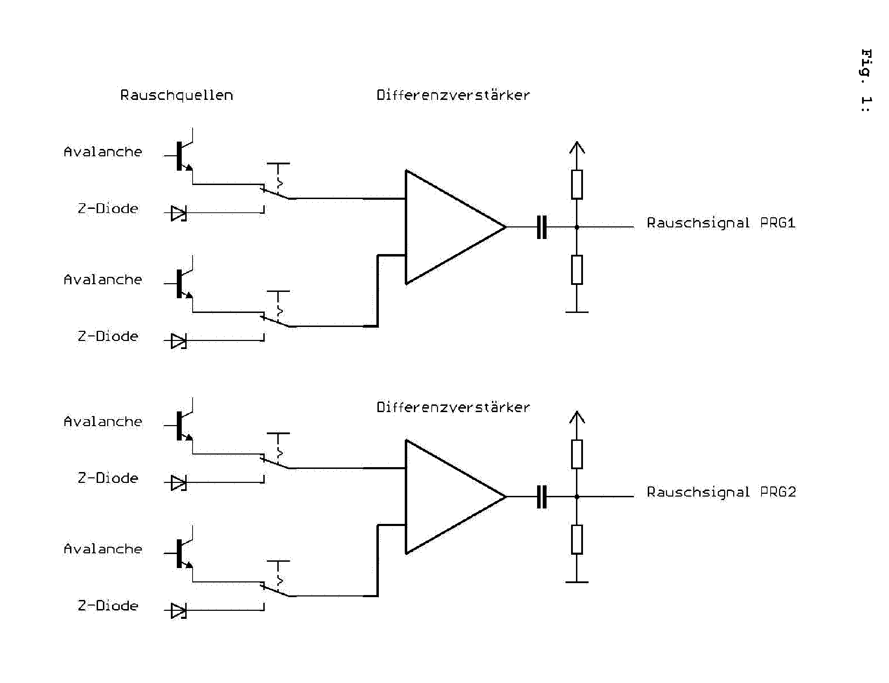

Das Blockschaltbild in Fig. 1 zeigt einen erfindungsgemässen ersten Signalgeber, bei welchem von einem Avalanche-Transistor auf eine Z-Diode umschaltbar ist. Es sind jeweils zwei derartige Rauschquellen mit einem Differenzverstärker wirkverbunden, so dass sich ein aus zwei Avalanche-Transistoren oder zwei Z-Dioden ergebendes Rauschsignal PRG1 bzw. PRG2 ergibt.

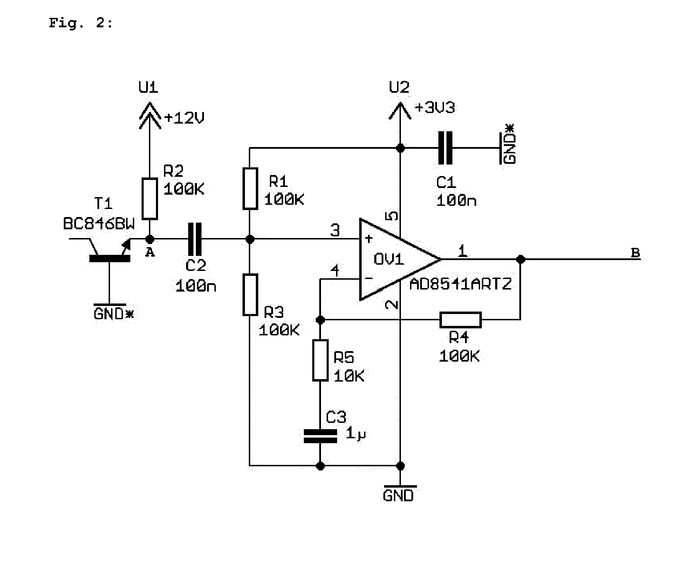

In Fig. 2 ist ein Stromlaufplan des ersten Signalgebers gemäss Fig. 1 gezeigt. An der Stelle A des Stromlaufplans beträgt die Signalstärke des Rauschsignals ca 200mV; an der Stelle B beträgt die Signalstärke des Ausgangssignals, das an eine Auswerteeinheit geleitet wird, ca 2V.

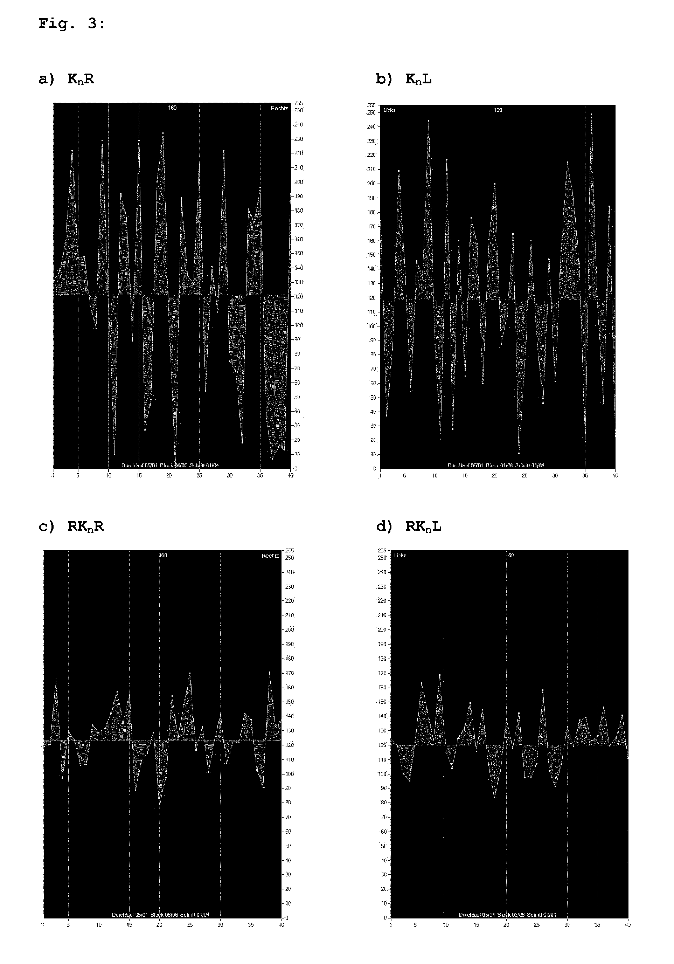

In Fig. 3 ist jeweils ein Referenzkurvenzug $RK_nL$ für "links" und $RK_nR$ für "rechts" gezeigt, wie sie typischerweise nach 24 Mittelungen einzelner Kurvenzüge $K_mL$ bzw. $K_mR$ erhalten werden (mit m = 1 bis 24, bei 24 Mittelungen). Es werden vorteilhaft jeweils 10 oder mehr Referenzkurvenzüge erfasst; n = 1 bis 10 (oder mehr). Diese Referenzkurvenzüge RKnL und RKnR werden jeweils in einen Referenzvektor RVnL bzw. RVnR umgewandelt. In dem gezeigten Ausführungsbeispiel wurde je Millisekunde ein Messwert aufgenommen, über einen Zeitraum von 400ms; hieraus ergibt sich bei der Umwandlung in einen Vektor ein 400-dimensionaler Vektor, wie vorstehend beschrieben. Eine erhöhte Genauigkeit ergibt sich, falls gewünscht, bei Verringerung des Intervalls auf unter 1ms auf bspw. 1ms. In dem gezeigten Ausführungsbeispiel wurde das Rauschsignal mit 8 bit diskretisiert (Abszisse).

Gemäss der Erfindung wurden bei einem Testlauf mit 60 Probanden (28 männlich, 32 weiblich; alle zwischen 18-40 Jahre alt) folgende Ergebnisse erhalten:

Für den Testlauf wurden zwei verschiedene, vollständig separierte Computersysteme bereitgestellt: Ein Computersystem für die Vorgabe der Gedanken an die Probanden und ein weiteres Computersystem für die Detektion. In der Kalibrierungsphase erzeugt das Vorgabesystem zeitgleich ein akustisches und visuelles Signal für "links" oder "rechts". Das heisst, im Falle von "links" bewegt sich beispielsweise ein Pfeil nach links oder es erscheint im linken Feld eines Bildschirms ein Pfeil; gleichzeitig mit diesem Erscheinen des optischen Signals ertönt ein akustisches Signal. In einem Zeitfenster von 500ms nach dem akustischen (und gleichzeitig visuellen) Signal werden die EEG-Signale des Probanden von dem separierten Aufnahmesystem detektiert. Das ganze wurde jeweils 3x repliziert für jede Aufforderung "links" und "rechts", und zwar immer zu dem mit dem akustischen und visuellen Signal vorgegebenen Zeitpunkt. Mittels Averaging dieser drei Signale werden, wie vorstehend beschrieben, Referenzvektoren für rechts und links erzeugt. Dies wurde jeweils zehn Mal wiederholt, so dass letztendlich jeweils zehn Referenzvektoren für rechts und links erhalten wurden, wie vorstehend beschrieben. In der Kalibrierungsphase ist auch im Aufnahmesystem als Information hinterlegt, welche Signale in welcher Reihenfolge von dem Vorgabesystem ausgegeben werden; dies ist notwendig, um die Zuordnung der Messdaten zu den Gedanken des Probanden als Kalibrationsdaten zu ermöglichen.

In der Anwendungsphase sind, im Gegensatz zur Kalibrierungsphase, im Aufnahmesystem keinerlei Information darüber hinterlegt, welche Signale in welcher Reihenfolge von dem Vorgabesystem ausgegeben werden. Es erscheint auf dem Vorgabesystem wiederum jeweils 3x die Kombination des akustischen und optischen Signals. Nach Erscheinen bspw. der Pfeile werden wiederum binnen 500ms jeweils die Signale des Probanden von dem Aufnahmesystem erfasst; mittels Averaging wird aus diesen drei Signalen, analog wie bei der Kalibrierung, ein neuer Vergleichsvektor erstellt, wie vorstehend beschrieben. Dieser wurde dann mit den gespeicherten Referenzvektoren verglichen. Aufgrund des Vergleichs mit den Referenzvektoren wurde dann (aufgrund des geringsten Abstands zum Referenzvektor im euklidischen Raum ermittelt, ob der Proband links oder rechts gedacht hat. Hinterher wurde ausgewertet, in wie vielen Fällen das System den Gedanken des Probanden richtig ermittelt hat.

Dabei ist ein Erwartungswert von 50% richtiger Klassifikation durch blosses Raten zu erwarten. Als Schwellwert wurde daher eine Probanden-Messung dann als erfolgreich definiert, wenn die Gedanken des Probanden zu 60% richtig und nur zu 40% ausgewertet wurden, da sich in diesem Fall bereits technisch interessante Applikationen realisieren lassen. Die Auswertung ergab, dass bei 14 von 60 Probanden unter den oben genannten Bedingungen eine richtige Klassifikation in ≥ 60% erreicht wurde. Das Ergebnis über alle Probanden ist statistisch hoch-signifikant, der p-Wert beträgt 0.004. Damit erfüllt das System bereits industrielle und wissenschaftliche Anforderungen, da Verfahren mit einem p-Wert < 0.05 (5%) als statistisch signifikant anzusehen sind und damit eingesetzt werden.

Die Ergebnisse zeigen weiterhin, dass manche Probanden noch sehr viel besser mit dem erfindungsgemässen Verfahren ausgemessen werden können, als oben dargelegt. So wurden in diversen, anderen Experimenten Probanden ermittelt, deren Gedanken mit viel höherer Genauigkeit ermittelt werden konnten. Der p-Wert dieser Probanden aus einem einseitigen Binomialtest war 0.00015 (und ist damit extrem signifikant), so dass diese selbst nach einer vom Fachmann durchgeführten Bonferroni-Korrektur über die Anzahl aller p-Werte als äusserst geeignet für die Methode gemäss der vorliegenden Erfindung gelten.

**Patentansprüche**

1. Verfahren zum Steuern oder Regeln einer Maschine mittels einer berührungslosen Mensch/Maschine-Schnittstelle, umfassend die Schritte:

a) Bereitstellen eines ersten Signalgebers, der mit mindestens einem ein Rauschsignal aufweisendes Bauteil ausgestattet ist;
b) Bereitstellen eines Datensatzes von Befehlen zur Steuerung einer Maschine;
c) optional Erhebung von Kalibrierungsdaten durch

ca) Anordnung des ersten Signalgebers und eines Menschen in räumlicher Nähe;
cb) wiederholte Aufnahme des Rauschsignals des ersten Signalgebers in Abhängigkeit von einem dem Menschen vorgegebenen Gedanken, wobei der Gedanke ausgewählt ist aus den Elementen des Datensatz gemäss b);
cc) Mittelung der gemäss cb) erhaltenen Rauschsignale für die einzelnen vorgegebenen Gedanken;
cd) mathematische Bearbeitung des/der gemäss cc) gemittelten Rauschsignals/Rauschsignale, wobei die mathematische Bearbeitung des in Schritt cc) bzw. db) erhaltenen, gemittelten Rauschsignals die Darstellung des erhaltenen Kurvenzugs als multidimensionalen Vektor umfasst;
ce) Speicherung der gemäss cc) erhaltenen Rauschsignale und/oder der hiervon gemäss cd) abgeleiteten Daten, zugeordnet zu Elementen des Datensatzes;
cf) ggf. Wiederholung der Verfahrensschritte cb)-ce) und Speicherung einer Mehrzahl von gemäss cc) erhaltenen Rauschsignalen und/oder den hiervon gemäss cd) abgeleiteten Daten, zugeordnet zu Elementen des Datensatzes, so dass zu einem Element des Datensatzes jeweils eine Mehrzahl von Rauschsignalen oder davon abgeleiteten Daten gespeichert werden;

d) Steuerung oder Regelung einer Maschine insbesondere unter Verwendung der gemäss c) erhobenen Kalibrierungsdaten durch

da) wiederholte Aufnahme des Rauschsignals des ersten Signalgebers in Abhängigkeit von einem dem Menschen nicht vorgegebenen (sondern von diesem frei gewählten) Gedanken, ausgewählt aus den Elementen des Datensatz gemäss b);
db) Mittelung der gemäss da) erhaltenen Rauschsignale für die nicht vorgegebenen Gedanken;
dc) mathematische Bearbeitung des/der gemäss db) gemittelten Rauschsignals/Rauschsignale, wobei die mathematische Bearbeitung des in Schritt cc) bzw. db) erhaltenen, gemittelten Rauschsignals die Darstellung des erhaltenen Kurvenzugs als multidimensionalen Vektor umfasst;
dd) Zuordnung des/der gemäss dc) erhaltenen Rauschsignals/Rauschsignale zu einem Gedanken des Datensatzes insbesondere aufgrund eines Vergleichs mit den gemäss c) erhobenen Kalibrierungsdaten und/oder vorgegebenen Referenzdaten.

2. Verfahren gemäss Anspruch 1, **dadurch gekennzeichnet, dass** das Rauschsignal ein Schrotrauschen oder Lawinenrauschen ist.

3. Verfahren gemäss Anspruch 1 oder 2, **dadurch gekennzeichnet, dass** der erste Empfänger als dasjenige Bauteil, welches ein Rauschsignal aufweist, ein Bauteil enthält, das ausgewählt ist aus der Gruppe bestehend aus Dioden, insbesondere oberhalb ihrer Sperrspannung betriebenen Z-Dioden; Gasentladungsröhren; Avalanche-Transistoren.

4. Verfahren gemäss einem der Ansprüche 1 bis 3, **dadurch gekennzeichnet, dass** der in Schritt b) bereitgestellte Datensatz von Befehlen zur Steuerung einer Maschine Elemente enthält ausgewählt aus der Gruppe bestehend aus "links", "rechts", "oben", "hoch", "unten", "runter", "vorne", "vorwärts", "hinten", "rückwärts".

5. Verfahren gemäss einem der Ansprüche 1 bis 4, **dadurch gekennzeichnet, dass** Signalgeber und Mensch in Schritt ca) in einem Abstand von > 1 cm, vorzugsweise von > 50 cm, besonders bevorzugt von > 1 m angeordnet werden.

6. Verfahren gemäss einem der Ansprüche 1 bis 5, **dadurch gekennzeichnet, dass** die Aufnahme des Rauschsignals des ersten Signalgebers in Abhängigkeit von einem dem Menschen vorgegebenen Gedanken in Schritt cb) über einen vordefinierten Zeitraum nach der Vorgabe des Gedanken erfolgt, insbesondere über den Zeitraum von 0 bis 1 s, vorzugsweise über den Zeitraum von 0 bis 500 ms nach der Vorgabe des Gedanken,
wobei die mathematische Bearbeitung des in Schritt cc) bzw. db)

erhaltenen, gemittelten Rauschsignals die Darstellung des erhaltenen Kurvenzugs als multidimensionalen Vektor umfasst.

7. Verfahren gemäss einem der Ansprüche 1 bis 6, **dadurch gekennzeichnet, dass** in Schritt a) ein erster Signalgeber bereitgestellt wird, der mit mindestens zwei ein Rauschsignal aufweisenden Bauteilen ausgestattet ist, welche zwei Bauteile über einen Differenzverstärker derart wirkverbunden sind, dass die Rauschsignale der wenigstens zwei Bauteile zu einem Rauschsignal vereinigt werden.

Fig. 1:

Rauschsignal PRG1

Rauschsignal PRG2

Differenzverstärker

Differenzverstärker

Rauschquellen

Avalanche  Z-Diode  Avalanche  Z-Diode  Avalanche  Z-Diode  Avalanche  Z-Diode

Fig. 2:

Fig. 3:

a) $K_nR$

b) $K_nL$

c) $RK_nR$

d) $RK_nL$

Europäisches
Patentamt

European
Patent Office

Office européen
des brevets

**EUROPÄISCHER RECHERCHENBERICHT**

**Nummer der Anmeldung**

EP 12 17 6632

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | EP 2 081 100 A1 (PANASONIC CORP [JP]) 22. Juli 2009 (2009-07-22) * Zusammenfassung * * das ganze Dokument * ----- | 1-7 | INV. G06F3/01 ADD. A61B5/0476 |
| A | EBRAHIMI T ET AL: "Brain-Computer Interface in Multimedia Communication", IEEE SIGNAL PROCESSING MAGAZINE, IEEE SERVICE CENTER, PISCATAWAY, NJ, US, Bd. 20, Nr. 1, 1. Januar 2003 (2003-01-01) , Seiten 14-24, XP011093777, ISSN: 1053-5888, DOI: DOI:10.1109/MSP.2003.1166626 * das ganze Dokument * ----- | 1-7 | |
| A | WO 2006/073915 A2 (CYBERKINETICS NEUROTECHNOLOGY [US]; FLAHERTY CHRISTOPHER J [US]; SERRU) 13. Juli 2006 (2006-07-13) * Zusammenfassung; Abbildungen 1-2,4 * ----- | 1-7 | |
| A | US 2007/266273 A1 (ADACHI SHINOBU [JP] ET AL) 15. November 2007 (2007-11-15) * Zusammenfassung * * Seite 1, Absatz 1 - Seite 1, Absatz 2 * * Seite 1, Absatz 5 - Seite 2, Absatz 16 * * Seite 3, Absatz 57 - Seite 5, Absatz 89; Abbildungen 17-19 * ----- | 1-7 | RECHERCHIERTE SACHGEBIETE (IPC) G06F A61B |
| A | Völz: "Elektronik", 31. Dezember 1986 (1986-12-31), Akademie Verlag Berlin, Berlin, XP002614547, ISBN: 3-05-500046-3 * Seite 156 - Seite 157 * * Seite 282 - Seite 286 * ----- | 1-3,6,7 | |
| A | US 6 002 299 A (THOMSEN AXEL [US]) 14. Dezember 1999 (1999-12-14) * Abbildung 3 * ----- -/-- | 7 | |

Der vorliegende Recherchenbericht wurde für alle Patentansprüche erstellt

| Recherchenort | Abschlußdatum der Recherche | Prüfer |
|---|---|---|
| Berlin | 29. August 2012 | Leineweber, Hubert |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

...................................................................................

& : Mitglied der gleichen Patentfamilie, übereinstimmendes Dokument

EPO FORM 1503 03.82 (P04C03)

**Europäisches Patentamt**
**European Patent Office**
**Office européen des brevets**

## EUROPÄISCHER RECHERCHENBERICHT

**Nummer der Anmeldung**

EP 12 17 6632

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | SCHENKE G: "Bauelemente der Elektrotechnik", INTERNET CITATION, 31. Januar 2008 (2008-01-31), Seiten 50-71, XP002635277, Gefunden im Internet: URL:http://www.et.fh-jena.de/scholz/F%C3%BCr-Mechatroniker/Skripte-G--ET-Mechatroniker/FH--Emden-Elektronische-Bauelemente/6_Halbdiode_BdE_6.pdf [gefunden am 2011-05-03] * das ganze Dokument * ----- | 1-7 | |
| A | SCHILLING OEHLER: "Brain Computer Interface, Mit Gehirnsignalen steuern", INTERNET CITATION, 30. Juni 2008 (2008-06-30), Seiten 1-7, XP002635278, Gefunden im Internet: URL:http://www.emg.tu-bs.de/pdf/EMG_PRESSE_BCI_180606.pdf [gefunden am 2011-05-03] * das ganze Dokument * ----- | 1-7 | **RECHERCHIERTE SACHGEBIETE (IPC)** |

Der vorliegende Recherchenbericht wurde für alle Patentansprüche erstellt

| Recherchenort | Abschlußdatum der Recherche | Prüfer |
|---|---|---|
| Berlin | 29. August 2012 | Leineweber, Hubert |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 12 17 6632

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-08-2012

| Im Recherchenbericht angeführtes Patentdokument | | Datum der Veröffentlichung | Mitglied(er) der Patentfamilie | | | Datum der Veröffentlichung |
|---|---|---|---|---|---|---|
| EP 2081100 | A1 | 22-07-2009 | CN | 101589358 | A | 25-11-2009 |
| | | | EP | 2081100 | A1 | 22-07-2009 |
| | | | JP | 4272702 | B2 | 03-06-2009 |
| | | | RU | 2009104463 | A | 20-08-2010 |
| | | | US | 2009247895 | A1 | 01-10-2009 |
| | | | WO | 2008059878 | A1 | 22-05-2008 |
| WO 2006073915 | A2 | 13-07-2006 | US | 2006167530 | A1 | 27-07-2006 |
| | | | US | 2006253166 | A1 | 09-11-2006 |
| | | | US | 2007032738 | A1 | 08-02-2007 |
| | | | WO | 2006073915 | A2 | 13-07-2006 |
| US 2007266273 | A1 | 15-11-2007 | CN | 101057207 | A | 17-10-2007 |
| | | | JP | 3991065 | B2 | 17-10-2007 |
| | | | US | 2007266273 | A1 | 15-11-2007 |
| | | | WO | 2006051709 | A1 | 18-05-2006 |
| US 6002299 | A | 14-12-1999 | AU | 7818898 | A | 30-12-1998 |
| | | | DE | 69818279 | D1 | 23-10-2003 |
| | | | DE | 69818279 | T2 | 24-06-2004 |
| | | | EP | 1010237 | A1 | 21-06-2000 |
| | | | JP | 2002504280 | A | 05-02-2002 |
| | | | US | 6002299 | A | 14-12-1999 |
| | | | WO | 9857422 | A1 | 17-12-1998 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **RALF OTTE.** Untersuchung von Artefakten bei der Messung von akustisch evozierten Hirnstammpotentialen. *Diplomarbeit,* 15 ff

- **U. KISCHKA ; C. WALLESCH ; G. WOLF.** Methoden der Gehirnforschung. Spektrum Akademischer Verlag, 1997, 171 ff